# NEW EUROPEAN PATENT SPECIFICATION

(11) **EP 1 721 915 B2**
(45) Date of publication and mention of the opposition decision: **19.10.2011**
(45) Mention of the grant of the patent: 21.05.2008
(21) Application number: 05010242.5
(22) Date of filing: 11.05.2005
(51) Int. Cl.: C08F 220/12, C08F 220/06, C08F 299/02, C08L 33/02, C08L 33/06

(54) **Hydrophobic alkali swellable emulsions (HASE)**
Hydrophobe alkaliquellfähige Emulsionen
Emulsions hydrophobiques et gonflables en milieu alcalin

(43) Date of publication of application: 15.11.2006
(73) Proprietor: Cognis IP Management GmbH, 40589 Düsseldorf (DE)
(72) Inventor: Bigorra Llosas, Joaquin, Dr., 08201, Sabadell (ES); Escoda, Maria, 08960, St. Just Desvem (Barcelona) (ES); Par, Otilia, 08008, Barcelona (ES); Schulte, Heinz-Günther, Dr., 41564, Kaarst (DE); Graupera, Elisabet, 08203, Sabadell (Barcelona) (ES)
(74) Representative: Fabry, Bernd

(56) References cited:
- EP-A1- 0 011 806
- EP-A2- 0 248 612
- US-A- 3 657 175
- US-A- 3 769 247
- US-A- 3 947 422
- US-A- 4 616 074
- US-A- 5 294 693

## Description

### Object of the invention

The present invention relates to emulsions comprising polymeric thickeners based on specific acrylates and maleic acid esters which exhibit their properties preferably under alkaline conditions, a process for obtaining them and various applications of said emulsions, preferably for thickening paints.

### State of the art

Polymeric thickeners belong to the state of the art since decades. Very well known are the so-called Carbopol types, polymers based on (meth-)acrylic acid and/or their esters which are widely used in cosmetics. Thickening, however, is a phenomenon often associated with the formation and stabilisation of mixed micelles and therefore even for one skilled in the art nearly impossible to predict. As a matter of fact, one thickener rather effective in one system or application can be worthless in another. This has lead to a huge number of polymeric thickening systems which have been obtained by a system of trial-and-error.

In the last years, certain polyurethane systems and especially copolymers of acrylic acid and maleic acid derivatives have been found rather interesting. For example, US 3,657,175 and US 4,351,754 (Rohm & Haas) disclose such products based on ethoxylated fatty alcohols. Copolymers of diisobutylene and partial esters of maleic acid and ethoxylated fatty alcohols and their use in cosmetics and detergents is known from EP 1191041 A1 and WO 01/096515 A1 (BASF). Similar copolymers based on olefins and esters of maleic anhydride and ethoxylated fatty alcohols are described in EP 0679669 A1 (Bayer); they serve, however, as pigment dispersants.

The major disadvantage of the products known either from patent literature or found in the market is their unsatisfactory thickening behaviour, especially with respect to built-up viscosity in paints. This is maintained even if the products are stored at higher or lower temperatures. Therefore, the problem which underlies the present invention has been to find a new polymeric thickening system, especially as auxiliary agent for paints and lacquers, which overcomes the disadvantages of the state of the art.

### Description of the invention

The present invention claims hydrophobically modified alkali swellable emulsions (HASE), comprising polymers consisting of the following monomers:
(a) 20 to 55 % b.w. acrylic and/or methacrylic acid,
(b) 40 to 80 % b.w. C₁-C₄ alkyl (meth)acrylates,
(c) 1 to 40 % b.w. of a maleic acid ester according to general formula **(I)**

   **HOOC-CH=CH-COO(CH₂CH₂O)ₙR¹** (I)

   in which R¹ stands for a linear or branched alkyl, aryl or alkaryl radical having 8 to 22 carbon atoms, and n means a number from 30 to 90,
(d) 0 to 15 % b.w. of aralphatic compounds having at least one double bond in the aliphatic side chain, and
(e) 0 to 1 % b.w. polyethylenic unsaturated cross-linking monomers,
calculated on the total composition of the polymers and under the condition, that compounds (a) to (e) add to 100 % b.w.

Surprisingly it has been found that the emulsions comprising the new polymers according to the invention provide a high viscosity to paints and lacquers, which is also stable in case the products are stored over a longer period and at higher and lower temperatures. For example, the new emulsions provide a viscosity to usual gloss and matt paints based either on inorganic pigments or polymeric resins, which is about twice as much of what can be achieved by using the same amount of polymeric thickeners according to the state of the art. In addition, viscosity remains stable over a period of at least 8 weeks and a storage temperature of 40 or 5°C, respectively, while under the same conditions products of the market lose about 50 % of their viscosity.

### Monomers

The polymers which form the bases of the inventive emulsions consist of at least three monomers:
(a) acrylic and/or methacrylic acid,
(b) C₁-C₄ alkyl (meth)acrylates, and
(c) maleic acid ester according to general formula (**I**).

It has, however, been found that with respect to component (a), mixtures of acrylic acid and methacrylic acid having a weight ratio from 10 : 90 to 90 : 10, preferably from 40 : 60 to 60 : 40, show the best performance in thickening lacquers and paints. With respect to component (b), methyl esters of acrylic and/or methacrylic acid are the preferred ones. Among the maleic esters of general formula (I), which form component (c), those are preferred in which
- R¹ represents a linear or branched alkyl radical having 12 to 18 carbon atoms.

The advantage of those esters is that they provide very good temperature stability to the viscosity of the thickened products.

### Optional co-monomers

In a preferred embodiment of the present invention, the polymers may comprise additional co-monomers (component d), which represent aralphatic components, having at least one double bond in the aliphatic side chain. A typical example is styrene. The advantage of incorporating component (d) into the structure of the polymer is to provide the products with high initial viscosity.

### Cross-linking agents

According to a second preferred embodiment of the present invention, said polymers may also contain cross-linking agents in order to improve the viscosity stability over time and under temperature stress. Examples of suitable cross-linkers are trimethylolpropane diallylether (TMPDAE), dipropylenglycol diacrylate (DPGDA) or allyl methacrylate.

### Hydrophobically modified alkali swellable emulsions (HASE)

In a third preferred embodiment of the present invention, the polymers have the following composition:
(a) 25 to 50, preferably 30 to 40 % b.w. acrylic and/or methacrylic acid,
(b) 50 to 70, preferably 60 to 65 % b.w. C₁-C₄ alkyl (meth)acrylates,
(c) 2 to 30, preferably 5 to 25 % b.w. of a maleic acid ester according to general formula (**I**),
(d) 0 to 10, preferably 1 to 5 % b.w. of aralphatic compounds having at least one double bond in the aliphatic side chain, and
(e) 0.1 to 1 % b.w. polyethylenic unsaturated cross-linking monomers,
again calculated on the total composition of the polymer and always under the condition that components (a) to (e) add up to 100 % b.w. The emulsions shall comprise said polymeric thickeners in an amount from 1 to 50; preferably 2 to 40 and more preferably 5 to 30 % b.w. (add water to give 100 % b.w.)

### Process

Another object of the present invention is to provide a process for making hydrophobic polymers, which is characterised in that
(a) 20 to 55 % b.w. acrylic and/or methacrylic acid,
(b) 40 to 80 % b.w. C₁-C₄ alkyl (meth)acrylates,
(c) 1 to 40 % b.w. of a maleic acid ester according to general formula (I)

   **HOOC-CH=CH-COO(CH₂CH₂O)ₙR¹** (I)

   in which R¹ stands for a linear or branched alkyl, aryl or alkaryl radical having 8 to 22 carbon atoms, and n means a number from 30 to 90.
(d) 0 to 15 % b.w. of aralphatic compounds having at least one double bond in the aliphatic side chain, and
(e) 0 to 1 % b.w. polyethylenic unsaturated cross-linking monomers,
calculated on the total composition of the polymers, under the condition, that compounds (a) to (e) add to 100 % b.w. and are co-polymerized in known manner, which is illustrated, but not limited by the following procedure:
**(i)** In a first reactor a fatty alcohol polyglycolether corresponding to general formula **(II)**

   **HO(CH₂CH₂O)ₙR¹** (II)

   in which R¹ and n have the same meanings as explained above, and maleic acid anhydride are placed in a molar ratio of 40 to 60 to 60 : 40. The mixture is heated for 2 to 5 h at 70 to 90 °C and the water of condensation separated off. Subsequently, the hemi ester thus obtained is cooled to 20 °C.
(ii) In a second reactor water, a small amount of an anionic emulsifier like e.g. an alkyl sulphate and (meth)acrylic acid (component a), alkyl (meth)acrylate (component b) and the hemi ester obtained in step (i) (component c) are mixed to form a monomer emulsion. The molar ratio of the compounds (a) : (b) : (c) is 1: 0.5 to 1,5 : 0.1 to 0.5
(iii) In a reactor water and again a small amount of said anionic emulsifier are placed and heated. Once the mixture reached 30 °C the reactor is purged with nitrogen and 10 to 20 % b.w. of the monomer emulsion prepared as described above, 0.01 to 0.5 % b.w. iron sulphate, and 0.01 to 1 % b.w. hydrogen peroxide are added. Finally, the mixture is treated with a an aqueous solution of sulfoxylated sodium formaldehyde. Once the exothermic reaction has finalised, the remaining part of the monomer emulsion and another portion of the sulfoxylated sodium formaldehyde is added within 1 to 2 h, while the temperature is maintained at 40 to 45 °C. After all compounds are added the temperature is raised to 50 °C and kept for about 1.5 h. Then a third portion of the sulfoxylated sodium formaldehyde solution is added. After the mixture has cooled down to 20 °C the polymer is obtained in quantitative yield.

In case components (d) and (e) are also incorporated into the structure of the polymer, these compounds are added during step (ii). Finally, the hydrophobic polymers thus obtained are diluted in water so that an active matter content of 1 to 50, preferably 2 to 40 and more pref erably 5 to 30 % b.w. is achieved.

### Industrial application

Another object of the present invention is directed to the use of said hydrophobically modified alkali swellable emulsions (HASE) as thickening agents, preferably by adding them to paints and lacquers. The final composition may comprise said emulsions in amounts from 0.1 to 2 % b.w. - calculated on active matter. In order to build up a high initial viscosity it has been found useful to combine the HASE with polysaccharides, preferably cellulose in ratios by weight of 10 : 90 to 90 to 10 and more preferably 50 : 50 to 75 : 25.

It has also been found that the HASE provide a high and stable viscosity to products for other applications. Another object of the present invention is therefore the use of HASE as thickening agents for aqueous surface active compositions, like detergents, cosmetics and auxiliary agents for the treatment of textiles, fibres and leather.

### Examples

### Preparation Example 1

(i) In a first 1-1-laboratory reactor, 500 g (0.24 mol) C₁₂-C₁₈ fatty alcohol+40 EO (Dehydol^{®} PTA 40, Cognis Deutschland GmbH & Co KG) and 24.45g (0.25 mol) maleic anhydride were placed. The mixture was heated for 3 h at 80 °C and the condensation water was separated off. Subsequently, the hemi ester thus obtained was cooled down to 20 °C.
(ii) In a second 5-1-laboratory reactor, 2291 g water, 53 g (0.17 mol) lauryl sulphate, 1197 g (11.97 mol) ethyl acrylate, 598 g (6.95 mol) methacrylic acid and 199 g (0.095 mol) of the hemi ester obtained in step (i) were mixed to form a monomer emulsion.
(iii) In a third 5-1-laboratory reactor, 1820 g water and 25 g (0.08 mol) lauryl sulphate were placed and heated. Once the mixture reached 30 °C, the reactor was purged with nitrogen and 10 % b.w. of the monomer emulsion prepared as described above, 0.27 g iron sulphate, 19 g water, and 6,7 g hydrogen peroxide were added. Finally, the mixture was treated with 10 Vol.-% of a solution of 2.1 g (0.018mol) Rongalita^{®} CF (sulfoxylated sodium formaldehyde, SSF) in 385 ml of water. Once the exothermic reaction has been finalised, the remaining part of the monomer emulsion and the rest of the SSF solution were added within 1.75 h while the temperature was maintained from 40 to 45 °C. After all compounds had been added, the temperature was raised to 50 °C and kept for 1.5 h. Then a third portion of 1.4 g (0.012 mol) SSF in 245 g water was added. After the mixture had cooled down to 20 °C, the polymer was obtained in quantitative yield.

### Preparation Example 2

(i) In a first 1-1-laboratory reactor, 500 g (0.24 mol) C₁₂-C₁₈ fatty alcohol+40 EO (Dehydol^{®} PTA 40, Cognis Deutschland GmbH & Co KG) and 24.45g (0.25 mol) maleic anhydride were placed. The mixture was heated for 3 h at 80 °C. Subsequently, the hemi ester thus obtained was cooled down to 20 °C.
(ii) In a second 5-1-laboratory reactor, 1722.4 g water, 40.0 g (0.13 mol) lauryl sulphate, 900 g (9.00 mol) ethyl acrylate, 525 g (6.10 mol) methacrylic acid, 150 g (0.071 mol) of the hemi ester obtained in step (i) and 5.0 g (0.027 mol) of trimethylolpropane diallylether were mixed to form a monomer emulsion.
(iii) In a third 5-1-laboratory reactor 1500 g water and 18.6 g (0.06 mol) lauryl sulphate were placed and heated: Once the mixture reached 30 °C the reactor was purged with nitrogen and 10 % b.w. of the monomer emulsion prepared as described above, 0.20 g Iron sulphate, 19.8 g water, and 5.0 g hydrogen peroxide were added. Finally, the mixture was treated with a 10 Vol.-% of a solution of 1.56 g (0.013mol) Rongalita^{®} CF in 287 ml of water. Once the exothermic reaction has finalised, the remaining part of the monomer emulsion and the rest of the SSF solution was added within 1.75 h, while the temperature was maintained at 40 to 45 °C. After all compounds had been added the temperature was raised to 50 °C and kept for 1.5 h. Then a third portion of 1.042 g (0.009 mol) SSF in 182.4 g water was added. After the mixture has cooled down to 20 °C, the polymer was obtained in quantitative yield.

### Formulation Example F3

The following table 1 discloses the composition of a paint comprising the new thickening emulsion, more particularly, the term thickener in the composition means 0.2 % b.w. of the polymer emulsion obtained according to example 1 + 0.1 % b.w. cellulose. The solids content of the paint was 59.0 % b.w., the relation between pigments and resins was 5.5 : 1, and the pigment volume concentration (PVC) resulted to 67.5 % b.w.

**Table 1**

| Paint composition (all concentrations % b.w.) | |
|---|---|
| Calcium carbonate | 38.00 |
| Titan dioxide | 12.00 |
| Other pigments | 18.00 |
| Hydropalat^{®} 5040 Polyacrylate dispersant | 0.20 |
| Thickening agent | 0.20 |
| Foamaster 50 Antifoaming agent based on mineral oil | 0.15 |
| Sodium hexametaphosphate | 0.10 |
| Ammonia (25 % b.v.) | 0.10 |
| Biocides | 0.10 |
| Water | add to 100 % |

### Application Example A4

In the following, the viscosity of flat paints based on acryl-styrene resins (Acronet^{®} 2380, Acronal^{®} 290 D, BASF) has been determined by adding 0.3 % b.w. of different thickening agents. The tests have been carried out according to the Brookfield method (spindle 4,10 rpm, 20 °C) and are reflected in table 2:

**Table 2**

| **Viscosity of flat paints (mPas)** | | |
|---|---|---|
| | **Acronet^{®} 2380** | **Acronal^{®} 290 D** |
| Rheolate^{®}420¹ | 15.420 | 13.900 |
| Acrysol^{®}TT 935¹ | 26.300 | 17.820 |
| HASE 40² | 42.900 | 24.700 |

| | | |
|---|---|---|
| 1 ) Rheolate^{®} and Acrysol^{®} are polymeric thickeners by Rohm & Haas and Elementis | | |

## Claims

1. Hydrophobically modified alkali swellable emulsions, comprising polymers consisting of the following monomers:
(a) 20 to 55 % b.w. acrylic and/or methacrylic acid,
(b) 40 to 80 % b.w. C₁-C₄ alkyl (meth)acrylates,
(c) 1 to 40 % b.w. of a maleic acid ester according to general formula (I)
**HOOC-CH=CH-COO(CH2CH₂O)ₙR¹ (I)**
in which R¹ stands for a linear or branched alkyl, aryl or alkaryl radical having 8 to 22 carbon atoms, and n means a number from 30 to 90,
(d) 0 to 15 % b.w. of aralphatic compounds having at least one double bond in the aliphatic side chain, and
(e) 0 to 1 % b.w. polyethylenic unsaturated cross-linking monomers,
calculated on the total composition of the polymers and under the condition that compounds (a) to (e) add up to 100 % b.w.

2. Emulsions according to claim 1, **characterised in that** component (c) represents a maleic acid ester of formula (I) in which R¹ represents a linear or branched alkyl radical having 12 to 18 carbon atoms, and R² stands for hydrogen or a (CH₂CH₂O)ₙR¹ radical.

3. Emulsions according to any of claims 1 to 2, **characterised in that** component (d) represents styrene.

4. Emulsions according to any of claims 1 to 3, **characterised in that** component (e) represents trimethylolpropane diallylether (TMPDAE), dipropylenglycol diacrylate (DPGDA), or allyl methacrylate.

5. Emulsions according to any of claims 1 to 4, **characterised in that** they comprise the polymeric thickeners in an amount from 1 to 50 % b.w.

6. Process for making hydrophobic polymers, **characterised in that**
(a) 20 to 55 % b.w. acrylic and/or methacrylic acid,
(b) 40 to 80 % b.w. C₁-C₄ alkyl (meth)acrylates,
(c) 1 to 40 % b.w. of a maleic acid ester according to general formula (I)
HOOC-CH=CH-COO(CH₂CH₂O)ₙR¹ (I)
in which R¹ stands for a linear or branched alkyl, aryl or alkaryl radical having 8 to 22 carbon atoms, R² stands for hydrogen or (CH₂CH₂O)ₙR¹, and n means a number from 30 to 90,
(d) 0 to 15 % b.w. of aralphatic compounds having at least one double bond in the aliphatic side chain, and
(e) 0 to 1 % b.w. polyethylenic unsaturated cross-linking monomers,
calculated on the total composition of the polymers under the condition that compounds (a) to (e) add up to 100 % b.w. and are co-polymerized in known manner.

7. Process for making hydrophobically modified alkali swellable emulsions according to claim 6 **characterised in that** said hydrophobic polymers obtainable according to the process of claim 5 are diluted in water so that active matter content of 1 to 50 % b.w. is achieved.

8. Use of hydrophobically modified alkali swellable emulsions according to claim 1 as thickening agents.

9. Use according to claim 8, **characterised in that** they are added to paints and lacquers.

10. Use according to claims 8 or 9, **characterised in that** they are added to the final compositions in amounts of 0.1 to 2 % b.w - calculated on active matter.

11. Use according to any of claims 8 to 10, **characterised in that** they are used in combination with polysaccharides.

12. Use of hydrophobically modified alkali swellable emulsions according to claim 1 as thickening agents for aqueous surface active compositions.

13. Use according to claim 12, **characterised in that** said surface active compositions are used as detergents, cosmetics, and auxiliary agents for the treatment of textiles, fibres and leather.

## Patentansprüche

1. Hydrophob modifizierte Alkali-quellbare Emulsionen, umfassend Polymere, die aus den folgenden Monomeren bestehen:
(a) 20 bis 55 Gew.-% Acryl- und/oder Methacrylsäure,
(b) 40 bis 80 Gew.-% C₁-C₄-Alkyl(meth)acrylate,
(c) 1 bis 40 Gew.-% eines Maleinsäureesters gemäß der allgemeinen Formel (I)
HOOC-CH=CH-COO (CH₂CH₂O)ₙR¹ (I)
worin R¹ für einen linearen oder verzweigten Alkyl-, Aryl- oder Alkarylrest mit 8 bis 22 Kohlenstoffatomen steht und n eine Zahl von 30 bis 90 bedeutet,
(d) 0 bis 15 Gew.-% an aralphatischen Verbindungen mit mindestens einer Doppelbindung in der aliphatischen Seitenkette und
(e) 0 bis 1 Gew.-% polyethylenisch ungesättigte Vernetzungsmonomere,
berechnet bezüglich der Gesamtzusammensetzung der Polymere und unter der Bedingung, dass die Verbindungen (a) bis (e) sich auf 100 Gew.-% aufaddieren.

2. Emulsionen gemäß Anspruch 1, **dadurch gekennzeichnet, dass** die Komponente (c) für einen Maleinsäureester der Formel (I) steht, worin R¹ einen linearen oder verzweigten Alkylrest mit 12 bis 18 Kohlenstoffatomen darstellt.

3. Emulsionen gemäß einem der Ansprüche 1 bis 2, **dadurch gekennzeichnet, dass** die Komponente (d) Styrol darstellt.

4. Emulsionen gemäß einem der Ansprüche 1 bis 3, **dadurch gekennzeichnet, dass** die Komponente (e) Trimethylolpropandiallylether (TMPDAE), Dipropylenglykoldiacrylat (DPGDA) oder Allylmethacrylat darstellt.

5. Emulsionen gemäß einem der Ansprüche 1 bis 4, **dadurch gekennzeichnet, dass** sie die polymeren Verdickungsmittel in einer Menge von 1 bis 50 Gew.-% umfassen.

6. Verfahren zur Herstellung von hydrophoben Polymeren, **dadurch gekennzeichnet, dass**
(a) 20 bis 55 Gew.-% Acryl- und/oder Methacrylsäure,
(b) 40 bis 80 Gew.-% C₁-C₄-Alkyl(meth)acrylate,
(c) 1 bis 40 Gew.-% eines Maleinsäureesters gemäß der allgemeinen Formel (I)
HOOC-CH=CH-COO(CH₂CH₂O)ₙR¹ (I)
worin R¹ für einen linearen oder verzweigten Alkyl-, Aryl- oder Alkarylrest mit 8 bis 22 Kohlenstoffatomen steht und n eine Zahl von 30 bis 90 bedeutet,
(d) 0 bis 15 Gew.-% an aralphatischen Verbindungen mit mindestens einer Doppelbindung in der aliphatischen Seitenkette und
(e) 0 bis 1 Gew.-% polyethylenisch ungesättigte Vernetzungsmonomere, berechnet bezüglich der Gesamtzusammensetzung der Polymere unter der Bedingung, dass die Verbindungen (a) bis (e) sich auf 100 Gew.-% aufaddieren und in einer bekannten Weise copolymerisiert werden.

7. Verfahren zur Herstellung von hydrophob modifizierten Alkali-quellbaren Emulsionen gemäß Anspruch 6, **dadurch gekennzeichnet, dass** die hydrophoben Polymere, welche gemäß dem Verfahren von Anspruch 6 erhältlich sind, in Wasser verdünnt sind, so dass ein Gehalt an aktivem Material von 1 bis 50 Gew.-% erreicht wird.

8. Verwendung von hydrophob modifizierten Alkali-quellbaren Emulsionen gemäß Anspruch 1 als Verdickungsmittel.

9. Verwendung gemäß Anspruch 8, **dadurch gekennzeichnet, dass** die Emulsionen zu Anstrichen und Lacken hinzugesetzt werden.

10. Verwendung gemäß Anspruch 8 oder 9, **dadurch gekennzeichnet, dass** die Emulsionen zu den Endzusammensetzungen in Mengen von 0,1 bis 2 Gew.-% - berechnet bezüglich aktivem Material - hinzugesetzt werden.

11. Verwendung gemäß einem der Ansprüche 8 bis 10, **dadurch gekennzeichnet, dass** die Emulsionen in Kombination mit Polysachariden verwendet werden.

12. Verwendung von hydrophob modifizierten Alkali-quellbaren Emulsionen gemäß Anspruch 1 als Verdickungsmittel für wässrige oberflächenaktive Zusammensetzungen.

13. Verwendung gemäß Anspruch 12, **dadurch gekennzeichnet, dass** die oberflächenaktiven Zusammensetzungen als Detergentien, Kosmetika und Hilfsmittel für die Behandlung von Textilien, Fasern und Leder verwendet werden.

## Revendications

1. Emulsions pouvant gonfler en milieu alcalin modifiées pour les rendre hydrophobes comprenant des polymères constitués par les monomères suivants :
(a) 20 à 55 % en poids d'acide acrylique et/ou méthacrylique,
(b) 40 à 80 % en poids de (méth)acrylates d'alkyle en C₁-C₄,
(c) 1 à 40 % en poids d'un ester d'acide maléique de formule générale (I) :
HOOC-CH=CH-COO (CH₂CH₂O)ₙR¹ (I)
dans laquelle R¹ représente un radical alkyle, aryle ou alcaryle linéaire ou ramifié ayant 8 à 22 atomes de carbone, et n désigne un nombre de 30 à 90,
(d) 0 à 15 % en poids de composés araliphatiques ayant au moins une double liaison dans la chaîne aliphatique latérale, et
(e) 0 à 1 % en poids de monomères de réticulation à insaturation polyéthylénique,
calculés sur la composition totale des polymères et étant précisé que les composés (a) à (e) s'ajoutent pour obtenir 100 % en poids.

2. Emulsions selon la revendication 1,
**caractérisées en ce que**
le composant (c) représente un ester d'acide maléique de formule (I) dans laquelle R¹ représente un radical alkyle linéaire ou ramifié ayant 12 à 18 atomes de carbone.

3. Emulsions selon l'une des revendications 1 et 2,
**caractérisées en ce que**
le composant (d) représente le styrène.

4. Emulsions selon l'une des revendications 1 à 3,
**caractérisées en ce que**
le composant (e) représente le triméthylolpropane-diallyléther (TMPDAE), le diacrylate de dipropylène glycol (DPGDA) ou le méthacrylate d'allyle.

5. Emulsions selon l'une des revendications 1 à 4,
**caractérisées en ce qu'**
elles renferment les épaississants polymères en quantité allant de 1 à 50 % en poids.

6. Procédé de préparation de polymères hydrophobes,
**caractérisé en ce que** :
l'on copolymérise de manière connue
(a) 20 à 55 % en poids d'acide acrylique et/ou méthacrylique,
(b) 40 à 80 % en poids de (méth)acrylates d'alkyle en C₁-C₄,
(c) 1 à 40 % en poids d'un ester d'acide maléique de formule générale (I) :
HOOC-CH=CH-COO (CH₂CH₂O)ₙR¹ (I)
dans laquelle R¹ représente un radical alkyle, aryle ou alcaryle linéaire ou ramifié ayant 8 à 22 atomes de carbone, et n désigne un nombre de 30 à 90,
(d) 0 à 15 % en poids de composés araliphatiques ayant au moins une double liaison dans la chaîne aliphatique latérale, et
(e) 0 à 1 % en poids de monomères de réticulation à insaturation polyéthylénique,
calculés sur la composition totale des polymères, étant précisé que les composés (a) à (e) s'ajoutent pour obtenir 100 % en poids.

7. Procédé de préparation d'émulsions pouvant gonfler en milieu alcalin modifiées pour les rendre hydrophobes selon la revendication 6,
**caractérisé en ce qu'**
on dilue dans l'eau les polymères hydrophobes pouvant être obtenus selon le procédé conforme à la revendication 6 de façon à obtenir une teneur en substance active de 1 à 50 % en poids.

8. Utilisation d'émulsions pouvant gonfler en milieu alcalin modifiées pour les rendre hydrophobes selon la revendication 1 en tant qu'agents épaississants.

9. Utilisation selon la revendication 8,
**caractérisée en ce que**
lesdites émulsions sont ajoutées à des peintures et à des vernis.

10. Utilisation selon la revendication 8 ou 9, **caractérisée en ce que**
lesdites émulsions sont ajoutées aux compositions finales en quantités allant de 0,1 à 2 % en poids, calculées sur la substance active.

11. Utilisation selon l'une des revendications 8 à 10, **caractérisée en ce que**
lesdites émulsions sont utilisées combinées à des polysaccharides.

12. Utilisation d'émulsions pouvant gonfler en milieu alcalin modifiées pour les rendre hydrophobes selon la revendication 1 en tant qu'agents épaississants pour compositions tensioactives aqueuses.

13. Utilisation selon la revendication 12, **caractérisée en ce que**
les compositions tensioactives sont utilisées comme détergents, cosmétiques et agents auxiliaires pour le traitement des textiles, des fibres et du cuir.
